# FASCICULE DE BREVET EUROPEEN

(11) **EP 3 874 448 B1**
(45) Date de publication et mention de la délivrance du brevet: **31.08.2022**
(21) Numéro de dépôt: 19790025.1
(22) Date de dépôt: 25.10.2019
(51) Int. Cl.: G06T 3/40

(54) **PROCÉDÉ DE TRAITEMENT D'UNE PLURALITÉ D'IMAGES ÉLÉMENTAIRES ACQUISES SUR UN CIRCUIT INTÉGRÉ**
VERFAHREN ZUR VERARBEITUNG EINER VIELZAHL VON ELEMENTAREN BILDERN, DIE AUF EINER INTEGRIERTEN SCHALTUNG ERFASST WERDEN
METHOD FOR PROCESSING A PLURALITY OF ELEMENTARY IMAGES ACQUIRED ON AN INTEGRATED CIRCUIT

(30) Priorité: 29.10.2018 FR 1860008
(43) Date de publication de la demande: 08.09.2021
(73) Titulaire: Texplained, 06560 Valbonne (FR)
(72) Inventeur: THOMAS, Olivier, 06530 LE TIGNET (FR)
(74) Mandataire: Hautier IP
(86) Numéro de dépôt international: PCT/EP2019/079282
(87) Numéro de publication internationale: WO 2020/089122

(56) Documents cités:
- WO-A1-2016/149817
- BABIN S ET AL: "Overlay of multiframe SEM images including nonlinear field distortions", PROCEEDINGS OF SPIE ISSN 0277-786X VOLUME 10524, SPIE, US, vol. 10585, 13 mars 2018 (2018-03-13), pages 105852B-105852B, XP060101467,
- P. JIN ET AL: "Correction of image drift and distortion in a scanning electron microscopy", JOURNAL OF MICROSCOPY, vol. 260, no. 3, 14 septembre 2015 (2015-09-14), pages 268-280, XP055587490, GB
- XI CHEN ET AL: "Correction of SEM image distortion based on non-equidistant GM(1,1) model", WAVELET ANALYSIS AND PATTERN RECOGNITION, 2012 INTERNATIONAL CONFERENCE ON, IEEE, 15 juillet 2012 (2012-07-15), pages 20-23, XP032232986,
- Olivier Thomas ET AL: "On the Impact of Automating the IC Analysis Process", Blackhat USA 2015, 1 août 2015 (2015-08-01), pages 1-10, XP055381034, Las Vegas, NV, USA Extrait de l'Internet: URL:https://www.blackhat.com/docs/us-15/ma terials/us-15-Thomas-Advanced-IC-Reverse-E ngineering-Techniques-In-Depth-Analysis-Of -A-Modern-Smart-Card-wp.pdf [extrait le 2017-06-13]

## Description

### DOMAINE DE L'INVENTION

Cette invention concerne le domaine de l'imagerie de circuits intégrés. Cette invention concerne en particulier un procédé de construction d'image panoramique à partir d'une mosaïque d'images de microscopie électronique à balayage SEM (acronyme anglais de « Scanning Electron Microscopy).

### ARRIERE-PLAN TECHNOLOGIQUE

Un circuit intégré est composé de plusieurs niveaux d'interconnexions et de plusieurs niveaux constitutifs des portes logiques, dits niveaux logiques.

Ces différents niveaux se présentent généralement sous forme de couches superposées les unes sur les autres.

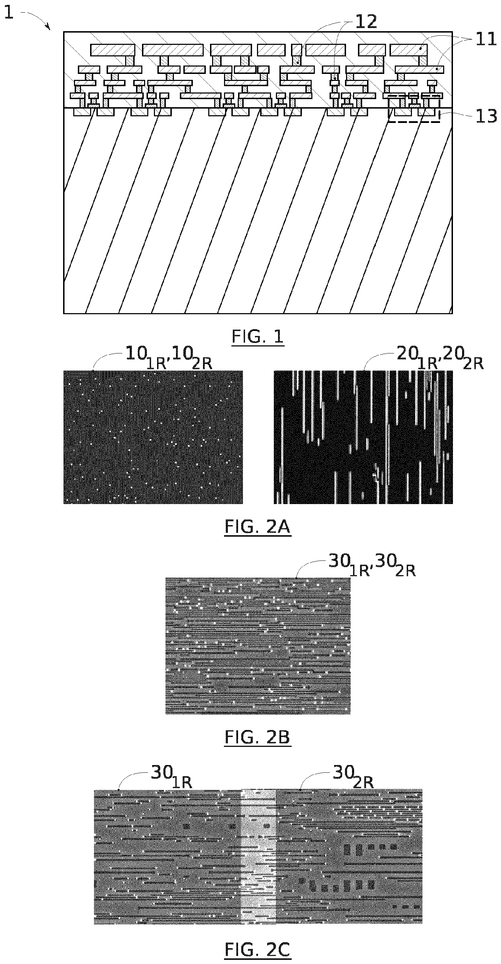

La figure 1 illustre en coupe transverse un circuit intégré 1 comprenant par exemple des niveaux d'interconnexions formés de quatre couches de pistes métalliques 11 appelées Métal 1, Métal 2, Métal 3, Métal 4, séparées les unes des autres par des couches diélectriques ILD 1, ILD 2, ILD 3 comprenant des interconnexions traversantes appelées vias 12. Le niveau logique de ce circuit intégré 1 comprend des transistors 13 formés sur un substrat de silicium.

Les niveaux d'interconnexions sont généralement situés en partie supérieure du circuit intégré.

Les niveaux logiques (comprenant les transistors) sont généralement situés directement sur un substrat, dans une partie sous-jacente à la partie comprenant les niveaux d'interconnexions. Ces niveaux logiques sont ainsi généralement « enterrés » au cœur du circuit intégré.

Dans le cadre d'analyses de défaillance ou d'analyses de construction d'un circuit intégré par exemple, il peut être avantageux de mettre en œuvre une rétro-conception du circuit intégré.

Cette rétro-conception permet par exemple de :
- évaluer le niveau de sécurité d'une technologie de circuit intégré,
- identifier des contrefaçons,
- détecter des anomalies de design introduites par un tiers (portes dérobées par exemple),
- vérifier la provenance du circuit intégré,
- étudier des dispositifs pirates introduits par un tiers,
- reconstruire des circuits obsolètes.

Afin d'accéder aux différents niveaux d'interconnexions, et en particulier aux niveaux logiques « enterrés », cette rétro-conception peut comprendre une succession d'étapes de déconstruction (appelées « deprocessing » en anglais) et de déstratification (appelées « delayering» en anglais) permettant d'exposer successivement les différentes couches du circuit intégré.

Après chaque étape, ces différentes couches peuvent être imagées afin d'identifier les structures ou les motifs présents dans chacune de ces couches.

L'imagerie des structures et motifs contenus dans un circuit intégré est généralement effectuée au moyen d'un microscope électronique à balayage SEM (acronyme anglais de « Scanning Electron Microscopy) et conduit à l'acquisition de milliers voire de dizaines de milliers d'images par couche du circuit.

Afin d'obtenir une vue globale des structures d'une couche du circuit, ces images sont de préférence acquises puis assemblées sous forme de mosaïque.

Idéalement, un assemblage bord à bord de deux images adjacentes permet, de proche en proche, de construire une image panoramique de la couche à imager. Cet assemblage peut être réalisé notamment à partir d'images présentant un recouvrement partiel entre elles.

Une image panoramique est ainsi construite à partir d'une mosaïque d'images pour chaque couche ou niveau d'interconnexions ou de logique.

Une telle image panoramique permet d'obtenir une visualisation bidimensionnelle des structures ou des motifs présents dans la couche correspondante.

En assemblant les images panoramiques entre elles, il est également possible d'accéder à une visualisation tridimensionnelle complète du circuit intégré.

Afin de garantir des visualisations bidimensionnelles et tridimensionnelles fidèles, il est essentiel d'aligner parfaitement les différentes images relativement les unes avec les autres, au sein d'un même couche (intra-niveau) et entre deux couches successives (inter-niveau). Un défaut d'alignement peut en effet générer des motifs non viables ou des erreurs structurelles dans le circuit intégré ainsi visualisé.

La principale difficulté pour réaliser cet alignement est due à une déformation des images par distorsion.

Cette distorsion peut résulter de l'acquisition des images. Il est relativement complexe d'anticiper ou de corriger ces distorsions en appliquant une correction "type" aux images, que ce soit lors de l'acquisition ou lors d'un traitement d'image post-acquisition.

En effet, cette distorsion n'est généralement pas constante ou reproductible d'une image à l'autre. Elle n'est généralement pas non plus symétrique au sein d'une image. Cette distorsion est souvent imprévisible.

Une solution consiste à utiliser ou à introduire des points de référence lors de l'acquisition des images au sein du microscope électronique à balayage.

Le document WO 2016/149817 A1 divulgue un procédé de correction de distorsion pour l'imagerie à balayage basé sur une émission-détection d'un faisceau, et sur une mesure d'intensité de ce faisceau à une position réelle d'un substrat.

Cette référence est ensuite utilisée pour corriger la position imagée du substrat vis-à-vis de sa position réelle, et permet de générer des images corrigée en distorsion.

Ce procédé permet notamment de corriger un ensemble d'images SEM en mosaïque, chaque image corrigée étant ensuite réalignée selon des lignes d'alignement propres à la mosaïque.

Un inconvénient de ce procédé est qu'il nécessite des mesures de référence à réaliser lors de l'acquisition des images.

Les méthodes classiques de construction d'une image panoramique à partir d'une mosaïque d'images se basent sur une corrélation des zones de recouvrement des images entre elles, par reconnaissance de formes par exemple.

Un inconvénient de ces méthodes est qu'elles nécessitent des ressources de calcul considérables.

Elles ne sont donc pas adaptées à la construction d'une image panoramique à partir d'un nombre élevé d'images déformées.

Un autre inconvénient est qu'elles ne permettent pas d'aligner différentes images panoramiques entre elles.

L'invention vise à pallier certains au moins des inconvénients mentionnés ci-dessus.

En particulier, un objet de l'invention est de proposer un procédé de traitement d'une pluralité d'images élémentaires acquises sur une zone d'un circuit intégré, permettant de corriger ces images en distorsion.

Un autre objet de l'invention est de proposer un procédé de construction d'une image panoramique d'une zone d'un circuit intégré à partir d'images élémentaires acquises sur ladite zone, permettant une visualisation bidimensionnelle et/ou tridimensionnelle.

D'autres buts, caractéristiques et avantages de la présente invention apparaîtront à l'examen de la description suivante et des dessins d'accompagnement.

### RESUME DE L'INVENTION

Un premier aspect de l'invention concerne un procédé de traitement d'une pluralité d'images élémentaires acquises sur au moins une zone d'au moins un niveau d'un circuit intégré à imager, dite zone à imager, lesdites images élémentaires de la pluralité d'images élémentaires étant des images de microscopie électronique à balayage SEM, ladite zone à imager comprenant des motifs alignés selon une grille de référence propre au circuit intégré, ledit procédé étant au moins en partie effectué par au moins un processeur et comprenant au moins la série d'étapes suivantes :
- Fournir ladite pluralité d'images élémentaires de la zone à imager, la taille de la zone à imager étant supérieure à la taille de chaque image élémentaire et chaque image élémentaire présentant un même grossissement et au moins un recouvrement partiel avec une image élémentaire adjacente de sorte que la pluralité d'images élémentaires forme une mosaïque couvrant toute la zone à imager,
- Déterminer des motifs dans chacune des images élémentaires, par exemple par seuillage d'intensité, lesdits motifs étant par construction alignés sur une grille de référence propre au circuit intégré,
- Déterminer dans chacune des images élémentaires au moins une ligne selon une première direction d'alignement des motifs et au moins une ligne selon une deuxième direction d'alignement des motifs, lesdites première et deuxième directions d'alignement étant sensiblement orthogonales entre elles,
- Former au moins partiellement une grille élémentaire pour chaque image élémentaire, à partir de l'au moins une ligne selon la première direction d'alignement et l'au moins une ligne selon la deuxième direction d'alignement, ladite grille élémentaire comprenant des positions pour chacun des motifs de l'image élémentaire,
- Former une grille élémentaire moyenne à partir des grilles élémentaires au moins partiellement formées, en combinant toutes les lignes des grilles élémentaires partiellement formées par superposition desdites grilles élémentaires partiellement formées, et en déterminant une position moyenne de ligne pour chaque ensemble de lignes sensiblement superposées,
- Déterminer à partir de la grille élémentaire moyenne un premier pas de grille moyen dans la première direction d'alignement et un deuxième pas de grille moyen dans la deuxième direction d'alignement,
- Former une grille élémentaire de référence présentant lesdits premier et deuxième pas de grille moyens,
- Transformer la grille élémentaire au moins partiellement formée comprenant les positions de chacun des motifs pour chacune des images élémentaires, de sorte à ce que ladite grille élémentaire soit totalement formée et présente lesdits premier et deuxième pas de grille moyens,
- Appliquer ladite transformation à chacune des images élémentaires, de sorte à obtenir des images élémentaires corrigées en distorsion.

Avantageusement, les positions de chacun des motifs pour chacune des images élémentaires sont ainsi corrigées. Cette correction correspond en particulier à une correction en distorsion des images élémentaires.

Dans chacune des images élémentaires, les motifs ont des positions dont les coordonnées sont généralement exprimées relativement à ladite image élémentaire, c'est-à-dire dont les coordonnées sont exprimées en pixels.

La formation de la grille élémentaire à partir des positions de motifs permet d'exprimer facilement les coordonnées des positions des motifs relativement à la grille élémentaire. Dans ce cas, les coordonnées deviennent simplement des nœuds de la grille élémentaire.

Dès lors, cette grille élémentaire relative à chaque image élémentaire facilite avantageusement une manipulation et/ou une transformation de chacune de ces images élémentaires dans le cadre d'opérations de traitement d'images. Le procédé de traitement d'images peut ainsi comprendre de telles manipulations ou transformations d'images élémentaires.

Le stockage des coordonnées de grille requiert en outre un espace de stockage très significativement inférieur à celui requis pour le stockage des coordonnées de pixels.

Selon une possibilité privilégiée, après transformation de chacune des grilles élémentaires, une image panoramique de la zone à imager est construite par corrélation, au niveau du recouvrement partiel entre deux images élémentaires adjacentes, des positions des motifs situés sur les grilles élémentaires.

La corrélation de motifs à partir de coordonnées de grille est simplifiée par rapport à une corrélation de motifs basée sur des pixels.

Cela permet avantageusement de réduire le temps de corrélation entre images élémentaires.

La capacité de traitement d'un grand nombre d'images élémentaires est ainsi améliorée. Par exemple, une image panoramique peut être formée par le procédé selon l'invention à partir d'un nombre d'images élémentaires supérieur à 10000.

Ainsi, selon un aspect, l'invention prévoit un procédé de construction d'une image panoramique à partir d'images élémentaires comprenant chacune une grille élémentaire totalement formée. Ce procédé comprend notamment une corrélation, au niveau d'un recouvrement partiel entre deux images élémentaires adjacentes, des positions des motifs situés sur les grilles élémentaires totalement formées. Les grilles élémentaires totalement formées des images élémentaires forment alors une grille élémentaire de l'image panoramique. On notera que le procédé de construction d'une image panoramique peut être exploité indépendamment du procédé de traitement d'une pluralité d'images élémentaires.

Avantageusement, la grille élémentaire totalement formée correspond après transformation à la grille de référence du circuit intégré. Cela permet notamment de superposer deux images panoramiques issues de deux niveaux consécutifs sans qu'il soit nécessaire que celles-ci présentent un même grossissement. La grille de référence du circuit intégré est en effet identique pour des niveaux consécutifs. Il suffit dès lors de transformer par homothétie la grille élémentaire totalement formée de la première image panoramique de sorte à ce qu'elle coïncide avec la grille élémentaire totalement formée de la deuxième image panoramique.

La grille élémentaire totalement formée à partir de la grille élémentaire moyenne peut également permettre de faciliter la détermination de tous les motifs d'une image élémentaire. Cette détermination se fait généralement par comparaison de pixels au sein de l'image élémentaire.

La comparaison des pixels correspondant aux nœuds de la grille élémentaire totalement formée avec les pixels situés au centre des cases formées par ladite grille peut suffire à détecter et à déterminer la présence de motifs.

Cette comparaison est avantageusement plus rapide et nécessite moins de ressources qu'une comparaison impliquant la majorité des pixels de l'image élémentaire.

La formation d'une grille élémentaire totalement formée correspondant à la grille de référence du circuit intégré permet donc de simplifier avantageusement des opérations de traitement d'images élémentaires, telles que la correction de distorsion, la détection et la détermination de tous les motifs d'une image élémentaire, et la corrélation d'images élémentaires et/ou d'images panoramiques entre elles.

Un deuxième aspect de l'invention concerne un produit programme d'ordinateur, enregistrées sur un support non transitoire, comprenant des instructions, qui, lorsqu'elles sont interprétées et exécutées par au moins un processeur effectuent la série d'étapes du procédé selon le premier aspect de l'invention.

### BREVE INTRODUCTION DES FIGURES

D'autres caractéristiques, buts et avantages de la présente invention apparaitront à la lecture de la description détaillée qui suit, et en regard des dessins annexés donnés à titre d'exemples non limitatifs et sur lesquels :
- la figure 1 est un schéma en coupe transverse d'un circuit intégré ;
- la figure 2A montre des images SEM acquises sur un circuit intégré comprenant des vias en cuivre et des lignes en cuivre ;
- la figure 2B montre une image SEM acquise sur un circuit intégré comprenant des vias en tungstène et sur des lignes en aluminium ;
- la figure 2C montre un recouvrement partiel entre deux images élémentaires SEM adjacentes ;
- les figures 3A et 3B correspondent respectivement à une vue de trois-quarts et une vue explosée selon différentes couches superposées d'un circuit intégré ;
- la figure 3C montre une première pluralité d'images élémentaires acquises sur une première zone d'un premier niveau d'un circuit intégré à imager et une deuxième pluralité d'images élémentaires acquises sur une deuxième zone d'un deuxième niveau du circuit intégré à imager ;
- la figure 4 illustre schématiquement un mode de réalisation d'un procédé de traitement d'une pluralité d'images élémentaires selon l'invention ;

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions des différentes zones et motifs ne sont pas nécessairement représentatifs de la réalité.

Dans la présente demande de brevet, les notations suivantes sont utilisées :
XX_{XR} : se réfère à une image élémentaire _{X} brute _{R} (pour « raw » en anglais), c'est-à-dire après acquisition et avant traitement, d'une zone à imager XX.
XX_{XG} : se réfère à une grille élémentaire _{G} d'une image élémentaire _{X}d'une zone à imager XX.
XX_{M} : se réfère à une grille élémentaire moyenne _{M} d'une zone à imager XX.
XX_{Gref} : se réfère à une grille élémentaire de référence _{Gref} d'une zone à imager XX.
XX_{XC} : se réfère à une image élémentaire _{X} corrigée _{C} d'une zone à imager XX.
XX_{C} : se réfère à une image panoramique corrigée _{C} d'une zone à imager XX.

### DESCRIPTION DETAILLEE

Avant d'entamer une revue détaillée de modes de réalisation de l'invention, il est rappelé que l'invention selon son premier aspect comprend notamment les caractéristiques optionnelles ci-après pouvant être utilisées en association ou alternativement :
- la transformation de la grille élémentaire partiellement formée se fait en ajoutant des lignes issues de la grille élémentaire moyenne de façon à compléter et former totalement ladite grille élémentaire, la grille élémentaire présentant alors différents pas de grille selon la première direction d'alignement et différents pas de grille selon la deuxième direction d'alignement, puis en ajustant lesdits différents pas de grille de sorte à ce qu'ils soient égaux respectivement aux premier et deuxième pas de grille moyens.

Cela permet de garder les positions initiales de motifs attachées aux nœuds de la grille élémentaire partiellement formée, puis de transformer ces positions initiales en ajustant les positions de chacun des nœuds de la grille élémentaire totalement formée de sorte à les faire coïncider avec la grille élémentaire de référence. Cela permet de former une image élémentaire présentant une grille élémentaire parfaitement régulière, sur laquelle les positions de motifs sont corrigées en distorsion.
- la grille élémentaire moyenne est formée en combinant toutes les lignes des grilles élémentaires partiellement formées par superposition desdites grilles élémentaires partiellement formées, et en déterminant une position moyenne de ligne pour chaque ensemble de lignes sensiblement superposées, de sorte à former une grille élémentaire moyenne totalement formée.

Cela permet statistiquement de former une grille élémentaire moyenne présentant un degré de correspondance avec la grille de référence du circuit intégré très élevé, au facteur de grossissement près. La grille élémentaire moyenne peut être formée différemment. Selon un autre exemple non limitatif elle peut être formée en affectant une pondération à un ou des sousensembles de lignes particuliers. Des lignes proches du centre de l'image - moins soumis à la distorsion - peuvent présenter par exemple un coefficient de pondération supérieur aux lignes des bords de l'image - plus soumis à la distorsion. Cela permet d'améliorer le degré de corrélation entre la grille élémentaire moyenne et la grille de référence du circuit intégré.
- la grille élémentaire moyenne est totalement formée en ajoutant des lignes par interpolation des lignes issues de la combinaison de toutes les lignes des grilles élémentaires partiellement formées.

Une telle interpolation permet de compléter si nécessaire la grille élémentaire moyenne en gardant un degré de correspondance avec la grille de référence du circuit intégré très élevé.
- la série d'étapes comprend en outre, après transformation de chacune des grilles élémentaires comprenant les positions de chacun des motifs pour chacune des images élémentaires :
   o Construire une image panoramique de la zone à imager par corrélation, au niveau du recouvrement partiel entre deux images élémentaires adjacentes, des positions des motifs situés sur les grilles élémentaires totalement formées, lesdites grilles élémentaires totalement formées formant une grille de l'image panoramique.

La corrélation, au niveau du recouvrement partiel entre deux images élémentaires adjacentes, des positions des motifs situés sur les grilles élémentaires totalement formées permet de construire rapidement et efficacement une image panoramique à partir d'une pluralité d'images élémentaires. En particulier, les positions des motifs correspondent à des nœuds des grilles élémentaires et la corrélation peut avantageusement se faire uniquement au niveau des nœuds de grilles élémentaires adjacentes dans ou à proximité du recouvrement partiel. En cas de noncorrespondance, les grilles élémentaires associées aux images élémentaires adjacentes sont simplement déplacées relativement l'une à l'autre, selon un multiple du premier et/ou du deuxième pas de grille, jusqu'à corrélation au niveau des nœuds des grilles élémentaires adjacentes. Cette opération de corrélation est donc effectuée seulement au niveau de quelques points particuliers, les nœuds des grilles élémentaires adjacentes, ce qui diminue considérablement le nombre de comparaisons à effectuer et le temps de cette opération de corrélation. Cela permet également avantageusement de limiter les ressources nécessaires pour chaque opération de corrélation unitaire entre deux images élémentaires adjacentes. La construction d'une image panoramique à partir d'un grand nombre d'images élémentaires, par exemple typiquement supérieur à 10000, requérant un grand nombre d'opérations de corrélation unitaires, est dès lors possible à partir des ressources de calcul offertes par un processeur ou un équipement raisonnablement performant et accessible.
- la zone à imager comprend une première zone sur un premier niveau du circuit intégré et une deuxième zone sur un deuxième niveau du circuit intégré, lesdits premier et deuxième niveaux étant consécutifs de sorte que les première et deuxième zones présentent des motifs communs superposables, et la série d'étapes est réalisée pour des images élémentaires acquises sur la première zone de sorte à construire une première image panoramique et pour des images élémentaires acquises sur la deuxième zone de sorte à construire une deuxième image panoramique, le procédé comprend en outre :
   o Egaliser les premiers pas de grille moyens des première et deuxième images panoramiques,
   o Egaliser les deuxième pas de grille moyens des première et deuxième images panoramiques,
   o Superposer les grilles des première et deuxième images panoramiques en corrélant des positions des motifs communs, afin d'obtenir une visualisation multi-niveaux du circuit intégré.

La formation et l'utilisation d'une grille pour chaque image panoramique permet avantageusement de mettre à une échelle commune les images panoramiques. Cela permet en outre de corréler rapidement et efficacement les images panoramiques entre elles, à partir de quelques points particuliers seulement, les nœuds des grilles des images panoramiques superposées. Cela diminue considérablement le nombre de comparaisons à effectuer et le temps de cette opération de corrélation entre images panoramiques issues de niveaux consécutifs. Les ressources de calcul nécessaires à une telle opération de corrélation sont en outre avantageusement limitées, ce qui permet d'obtenir une visualisation multi-niveaux du circuit intégré.
- la pluralité d'images élémentaires comprend au moins 1000 images.
- les images élémentaires de la pluralité d'images élémentaires sont des images de microscopie électronique à balayage SEM.
- les motifs sont pris parmi des points et des segments correspondants respectivement à des vias et des portions de lignes d'interconnexions du circuit intégré.

Une telle modélisation des motifs permet avantageusement de réduire les données contenues dans une image élémentaire. Un point est ainsi défini par un seul couple de coordonnées. Il est en outre associé un premier niveau d'intensité typique, représentatif d'un motif ou d'une structure de type via traversant. Un segment est ainsi défini par deux couples de coordonnées. Il est en outre associé un deuxième niveau d'intensité typique, représentatif d'une partie au moins d'un motif ou d'une structure de type ligne d'interconnexion.
- la détermination des vias dans chacune des images élémentaires est réalisée par filtrage selon au moins un paramètre pris parmi un diamètre, une aire, une forme ovale.
- le procédé comprend également au moins une étape de manipulation ou de transformation des images élémentaires.
- la zone à imager est préalablement exposée par au moins une étape prise parmi une étape de déconstruction et une étape de déstratification.

Une telle étape préalable permet avantageusement de préparer la zone à imager, par exemple selon un protocole établi, afin d'optimiser la qualité des images élémentaires acquises sur ladite zone.

Cela permet également d'exposer des niveaux de cœur du circuit intégré, de façon à explorer physiquement le circuit intégré par exemple selon les trois dimensions de l'espace, afin de reconstruire une visualisation tridimensionnelle de ce circuit intégré.

L'invention selon son deuxième aspect comprend notamment les caractéristiques optionnelles ci-après pouvant être utilisées en association ou alternativement :
- le produit programme d'ordinateur comprend un module de vérification et de correction par un opérateur de la détermination des motifs.
- la corrélation entre images adjacentes et/ou entre images panoramiques peut être vérifiée et corrigée par l'opérateur par déplacement desdites images adjacentes et/ou panoramiques relativement entre elles selon un multiple des premier et deuxième pas de grille.

Dans la suite, un niveau d'interconnexion comprend des interconnexions horizontales et verticales.

Un repère orthonormé xyz est représenté sur les figures annexées à la présente demande de brevet. Les termes « horizontal, horizontalement » se réfèrent à une extension, un déplacement selon un plan xy du repère.

Les termes « vertical, verticalement » se réfèrent à une extension, un déplacement selon l'axe z du repère.

Les interconnexions horizontales correspondent à des pistes métalliques s'étendant dans un plan basal xy et formant une couche dite « couche Métal *i (i=1...n)* ». Deux couches Métal i *et j* sont séparées entre elles par une couche diélectrique isolante.

Une image élémentaire réalisée dans un plan xy au sein d'une couche Métal i comprend donc essentiellement des structures linéaires correspondant aux pistes métalliques, sur un fond uniforme correspondant au matériau diélectrique isolant ces pistes entre elles. Ces structures linéaires sont modélisables par des segments présentant par exemple un premier niveau de gris ou d'intensité différent du niveau de gris ou d'intensité du fond.

Les interconnexions verticales correspondent à des vias traversants s'étendant longitudinalement selon z. Ces vias traversent la couche diélectrique isolante afin de relier deux pistes métalliques de deux couches Métal i et *i+1* consécutives par exemple. Ces vias traversants sont simplement dénommés vias dans la suite.

Une image élémentaire réalisée dans un plan xy au sein d'une couche diélectrique isolante comprend donc essentiellement des structures rondes correspondant aux sections transverses des vias, sur un fond uniforme correspondant au matériau diélectrique. Ces structures rondes sont modélisables par des points présentant par exemple un deuxième niveau de gris ou d'intensité différent du niveau de gris ou d'intensité du fond.

Pour des couches de faible épaisseur, présentant par exemple une épaisseur comprise entre quelques dizaines de nanomètres et quelques centaines de nanomètres, l'acquisition d'une image élémentaire par microscopie électronique à balayage sur un niveau d'interconnexion peut résulter en une image élémentaire composite, comprenant à la fois des structures linéaires et des structures rondes sur un fond uniforme (cela est dû notamment à la profondeur de pénétration du faisceau d'électrons sous la surface de la zone à imager).

La modélisation d'une telle image élémentaire comprenant des structures linéaires et/ou des structures rondes par des niveaux d'intensité régulièrement distribués selon des coordonnées (x,y) d'une grille représentant la grille de référence du circuit intégré est à la base du procédé selon l'invention.

L'utilisation d'une grille élémentaire de référence modélisant la grille de référence du circuit intégré, pour traiter des images élémentaires et en particulier pour corriger la distorsion de ces images élémentaires, peut donc être déduite d'une première distribution approximativement régulière de coordonnées de motifs stockées au moins temporairement sur un support de stockage tel qu'un serveur, avant traitement selon des opérations de correction de distorsion et/ou de corrélation. Cette utilisation peut également être déduite d'une deuxième distribution parfaitement régulière de coordonnées de motifs stockées au moins temporairement, après traitement selon lesdites opérations.

La transformation de la première distribution pour former la deuxième distribution est effectuée en calculant un premier et un deuxième pas de grille moyens. Ces premier et deuxième pas de grille moyens sont des paramètres essentiels du procédé selon l'invention.

En référence aux figures 2A, 2B, 2C, une première étape du procédé selon l'invention consiste à imager ou à fournir des images élémentaires du circuit intégré 1.

Ces images élémentaires sont de préférence des images acquises par microscopie électronique à balayage (figures 2A et 2B).

Ces images élémentaires forment de préférence une mosaïque de la zone à imager du circuit intégré 1. Cette mosaïque couvre de préférence une zone à imager sur un seul et même niveau d'interconnexion du circuit intégré 1. Les images élémentaires adjacentes présentent de préférence entre elles un recouvrement compris entre 10 % et 30% (figure 2C).

Ces images élémentaires sont de préférence des images brutes, non modifiées après acquisition. Elles peuvent présenter une résolution de 1024 x 768 pixels. Une telle résolution est suffisante pour assurer une bonne correction de distorsion par le procédé selon l'invention. Cette résolution permet en outre d'acquérir plus rapidement les images et/ou d'acquérir plus d'images, de façon à réaliser et à traiter des mosaïques comprenant par exemple plusieurs milliers d'images.

La vitesse de balayage requise pour l'acquisition des images élémentaires SEM est de préférence relativement élevée, correspondant par exemple à une durée comprise entre 1 et 3 secondes par image, de façon à minimiser la distorsion native pour chaque image élémentaire SEM.

Les images élémentaires présentent de préférence une même orientation vis-à-vis du circuit intégré 1 à imager. En particulier, la direction du balayage de chaque image SEM peut être parallèle à une direction cristallographique selon laquelle sont alignées les structures du circuit intégré 1.

Ces images élémentaires sont toutes de préférence focalisées de façon identique sur la zone à imager.

Afin d'exposer chaque zone à imager, comprenant de préférence les structures ou les motifs présents dans chaque niveau d'interconnexion, au moins une étape préalable de déstratification peut être nécessaire.

Une telle étape peut mettre en œuvre des procédés standards d'analyse de défaillance parfaitement connus de l'homme du métier, tels que des procédés de gravure et/ou de polissage mécano-chimique par exemple.

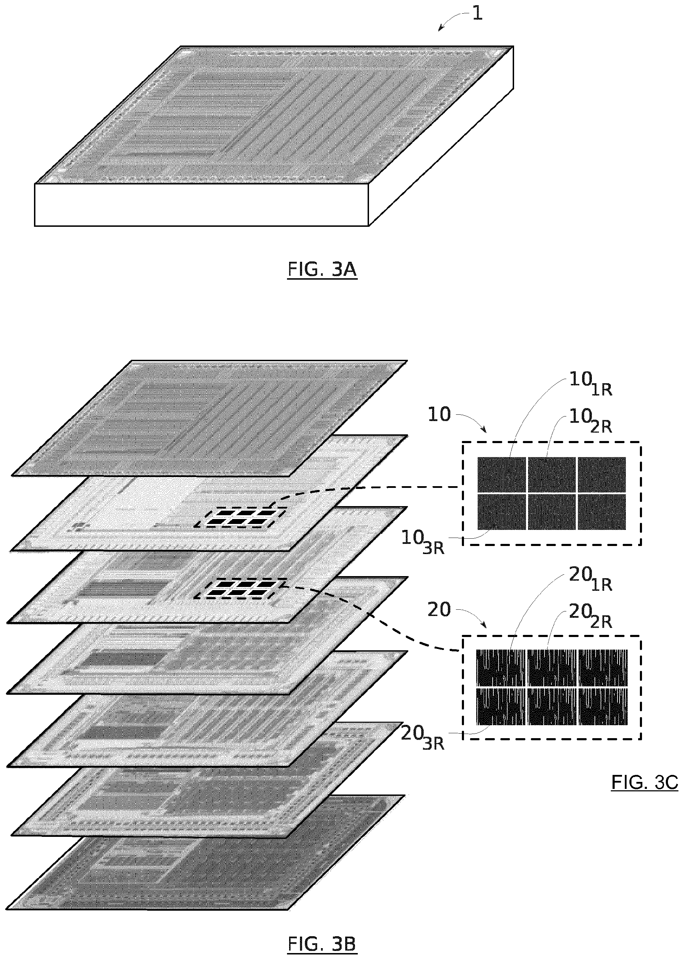

Tel qu'illustré aux figures 3A, 3B, cette étape permet en particulier d'accéder aux différents niveaux d'interconnexions.

Un nettoyage de la surface à imager est de préférence effectué de façon à éviter une présence de poussières parasites par exemple.

Une image élémentaire peut en particulier comprendre des lignes ou des pistes d'interconnexion métalliques, et/ou des vias traversants.

Selon la technologie utilisée dans la conception du circuit intégré 1, les lignes métalliques peuvent être en cuivre Cu et les vias traversants en cuivre Cu. En microscopie électronique à balayage, le cuivre présente un bon contraste d'intensité vis-à-vis du matériau diélectrique environnant. Il n'est cependant pas évident dans ce cas de distinguer les lignes métalliques et les vias traversants sur une même image.

Il peut dès lors être nécessaire de procéder à une étape supplémentaire de déstratification, de sorte à exposer les vias sans que ceux-ci ne soient masqués par les lignes d'interconnexion supérieures.

Tel qu'illustré à la figure 3C, une mosaïque 10 d'images élémentaires brutes 10_{1R}, 10_{2R}, 10_{3R} comprenant des vias peut ainsi être obtenue sur une première couche exposée, et une mosaïque 20 d'images élémentaires brutes 20_{1R}, 20_{2R}, 20_{3R} comprenant des lignes peut être obtenue sur une deuxième couche sous-jacente à la première couche, après déstratification.

Alternativement, la technologie utilisée dans la conception du circuit intégré 1 peut se baser sur des lignes métalliques en aluminium Al et des vias traversants en tungstène W. Ces matériaux présentent un contraste d'intensité entre eux lorsqu'ils sont imagés par microscopie électronique à balayage.

Dès lors, une image élémentaire SEM 30_{1R}, 30_{2R} acquise sur un niveau d'interconnexion basé sur cette technologie Al/W peut révéler à la fois des lignes et des vias. En particulier, les lignes métalliques en Al peuvent être retirées préalablement à l'imagerie, par exemple par un procédé de gravure humide sélective par rapport au tungstène. Les vias en tungstène peuvent avantageusement rester intacts après retrait des lignes en aluminium. Une empreinte des lignes est observable après retrait de l'aluminium. Cette empreinte peut apparaître sombre tandis que les vias peuvent apparaître clairs sur une telle image (figure 2B). Il est donc possible de distinguer ces différentes structures sur une même image, en fonction des niveaux de gris ou d'intensité. D'autres méthodes, notamment issues du domaine de l'Analyse de Défaillance, peuvent être mises en œuvre afin d'acquérir une image élémentaire SEM 30_{1R}, 30_{2R} permettant de distinguer par contraste d'intensité les lignes et les vias.

Les motifs présents au sein d'une image élémentaire sont ensuite déterminés au moyen d'un algorithme de seuillage, de filtrage et/ou de reconnaissance de forme typiquement.

Afin d'optimiser cette détermination, les images élémentaires présentent de préférence un bon contraste et une bonne luminosité, utilisant par exemple la totalité de l'échelle des niveaux de gris sans saturation.

En particulier, une image élémentaire de bonne qualité comprenant des vias et des lignes est telle que les vias présentent un diamètre inférieur à la largeur de la ligne auquel il est connecté.

Un point plus sombre peut être observé au centre du via, indiquant notamment une focalisation correcte et un bon équilibre entre le contraste et la luminosité. Les vias présentent de préférence des bords nets, sans halo.

La taille des motifs est également un aspect important pour une bonne détermination.

Typiquement, le diamètre des vias est de préférence supérieur à 6 pixels.

La largeur des lignes est de préférence supérieure à 7 pixels.

L'espacement entre lignes est de préférence supérieur à 10 pixels et la largeur du matériau diélectrique entre lignes métalliques est de préférence supérieure à 8 pixels.

L'algorithme permet de préférence de détecter tous les vias d'une mosaïque de 1500 images élémentaires en un temps de quelques minutes, par exemple avantageusement en un temps de l'ordre de 2 min.

L'algorithme permet de préférence de détecter toutes les lignes d'une mosaïque de 1500 images élémentaires en un temps de quelques minutes, par exemple avantageusement en un temps de l'ordre de 3 min.

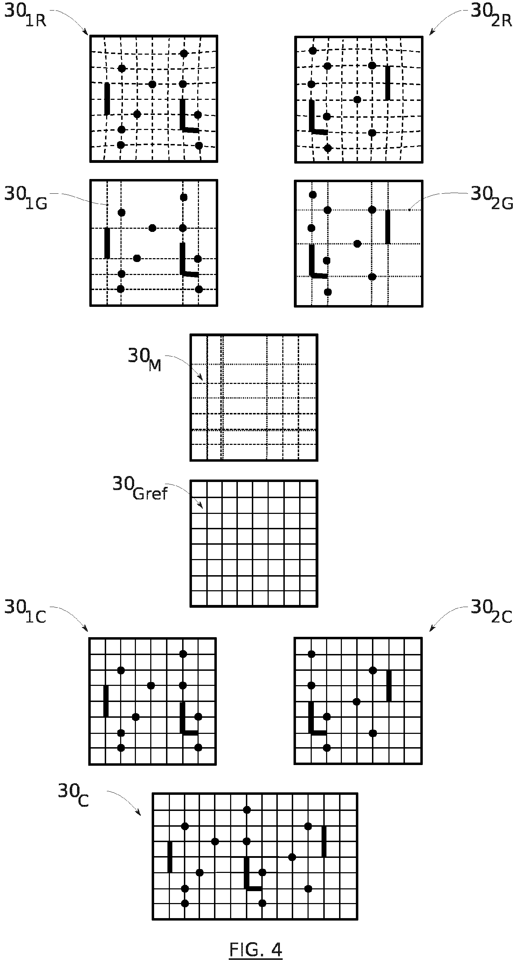

En référence à la figure 4, après détermination des motifs présents dans chacune des images élémentaires 30_{1R}, 30_{2R}, une grille élémentaire 30_{1G}, 30_{2G} est formée pour chaque image élémentaire 30_{1R}, 30_{2R}.

Cette grille élémentaire 30_{1G}, 30_{2G} est formée à partir d'un alignement des motifs entre eux, selon deux directions sensiblement orthogonales.

En particulier, pour une image élémentaire SEM préalablement orientée, une première direction d'alignement des motifs est sensiblement parallèle au sens de balayage, et une deuxième direction d'alignement des motifs est sensiblement normale au sens de balayage.

La grille élémentaire 30_{1G}, 30_{2G} comprend des lignes selon la première direction et des lignes selon la deuxième direction, éventuellement bornées par le cadre de l'image élémentaire 30_{1R}, 30_{2R}.

Cette grille élémentaire 30_{1G}, 30_{2G} reflète partiellement la grille de référence qui permet d'aligner physiquement les différentes structures du circuit intégré 1 lors de sa conception.

Cette grille de référence est une grille parfaite présentant un premier pas de grille dans la première direction et un deuxième pas de grille dans la deuxième direction. Ces premier et deuxième pas de grille peuvent être égaux entre eux ou différents.

Dans le cas d'une image élémentaire distordue par exemple, la grille élémentaire 30_{1G}, 30_{2G} reflétant partiellement la grille de référence ne présente pas un pas de grille constant.

Les étapes suivantes du procédé selon l'invention visent à reformer une grille élémentaire, dite grille élémentaire de référence, qui reflète le mieux possible la grille de référence du circuit intégré 1.

Les grilles élémentaires 30_{1G}, 30_{2G} de chaque image élémentaire 30_{1R}, 30_{2R} peuvent être superposées les unes sur les autres, de façon à former une grille élémentaire moyenne 30_{M}.

Cette superposition peut se faire de sorte qu'un maximum de lignes des grilles élémentaires soit superposable.

Les positions des lignes qui ne sont pas parfaitement superposées sont de préférence moyennées.

Au besoin, s'il manque des lignes dans la grille élémentaire moyenne 30_{M}, celle-ci peut être complétée par interpolation par exemple.

A ce stade, la grille élémentaire moyenne 30_{M} ne présente pas nécessairement des premier et deuxième pas de grille constants.

Un premier pas de grille moyen dans la première direction et un deuxième pas de grille moyen dans la deuxième direction peuvent dès lors être calculés.

La grille élémentaire de référence 30_{Gref} est formé à partir de ces premier et deuxième pas de grille moyens.

Statistiquement, à partir d'un grand nombre d'images élémentaires par exemple supérieur ou égal à 1500, cette grille élémentaire de référence 30_{Gref} construite à partir de la grille élémentaire moyenne 30_{M} reflète fidèlement la grille de référence du circuit intégré 1.

Cette grille élémentaire de référence 30_{Gref} peut ensuite permettre de compléter chaque grille élémentaire 30_{1G}, 30_{2G} afin d'obtenir des grilles élémentaires 30_{1G}, 30_{2G} totalement formées et présentant les premier et deuxième pas de grille moyens.

Les images élémentaires peuvent dès lors subir la même transformation que leurs grilles élémentaires respectives.

Cette transformation des images élémentaires permet d'obtenir des images élémentaires 30_{1C}, 30_{2C} corrigées en distorsion.

Après assignation d'une grille élémentaire de référence à toutes les images élémentaires, et correction de la distorsion de ces images élémentaires, ces dernières peuvent être assemblées horizontalement entre elles de manière à former une image panoramique de la zone à imager.

Cet assemblage se fait de préférence par corrélation entre images adjacentes au niveau de leurs zones de recouvrement.

La correction de la distorsion permet d'améliorer significativement cette corrélation.

L'utilisation de grilles élémentaires de référence permet en outre de faciliter la manipulation des images pour obtenir une bonne corrélation.

Les motifs étant uniquement sur des nœuds de ces grilles élémentaires de référence, seules les coordonnées des nœuds de ces grilles sont à tester lors de l'opération de corrélation entre deux images.

S'il n'y a pas de correspondance entre les intensités respectives des pixels portés par les nœuds des grilles de chaque image, les images sont translatées horizontalement l'une par rapport à l'autre selon un multiple des premier et/ou deuxième pas de grille moyens.

L'opération de corrélation peut ainsi être exécutée pour quelques positions relatives des images élémentaires seulement, correspondant aux positions où leurs grilles élémentaires de référence coïncident.

La corrélation entre images élémentaires adjacentes 30_{1C}, 30_{2C} est ainsi avantageusement facilitée. Elle est ainsi plus rapide et nécessite moins de ressource de calcul de la part du processeur chargé de cette opération.

L'algorithme permet de préférence de corréler toutes les images élémentaires d'une mosaïque de 1500 images élémentaires en un temps de quelques minutes, par exemple avantageusement en un temps de l'ordre de 2 min.

Après corrélation, les zones de recouvrement entre images élémentaires adjacentes peuvent être fusionnées de façon à obtenir une seule image panoramique.

Une image panoramique 30_{C} est ainsi formée.

Cette image panoramique n'est avantageusement pas limitée en taille. Elle peut résulter d'un nombre d'images élémentaires par exemple supérieur à 1000, de préférence supérieur à 10000, par exemple de l'ordre de 30000.

Afin de construire une visualisation tridimensionnelle multi-niveaux, une image panoramique peut être formée pour chaque couche de chaque niveau d'interconnexions par exemple, après exposition de ces couches par des étapes de déstratification intercalaires.

Ces différentes images panoramiques résultant de zones à imager superposables entre elles, peuvent ensuite être alignées verticalement les unes relativement aux autres.

Une corrélation verticale au niveau de certains nœuds des grilles associées à chaque image panoramique permet avantageusement d'aligner rapidement et facilement les images panoramiques des différents niveaux d'interconnexions entre elles.

En particulier, les vias traversants sont des structures connectant verticalement les différents niveaux entre eux.

Dès lors, une corrélation au niveau des nœuds portant des vias peut avantageusement permettre cet alignement vertical.

Selon une possibilité, cet alignement des images panoramiques entre elles peut se faire au niveau d'un coin comprenant un marqueur ou une structure de référence identifiable.

Les images panoramiques ne présentant pas de distorsion, cela est suffisant pour aligner correctement via le système de grille ces images panoramiques entre elles.

Les images panoramiques peuvent éventuellement présenter des grossissements différents, sans que cela soit préjudiciable à la formation de la visualisation tridimensionnelle multi-niveaux.

Selon une possibilité avantageuse, le système de grille permet de s'affranchir d'une mise à l'échelle préalable des images élémentaires lors de la formation des images panoramiques.

Une simple homothétie peut permettre d'égaliser les pas de grille de deux images panoramiques présentant initialement des grossissements différents, de sorte à effectuer une mise à l'échelle commune de ces deux images panoramiques.

Un autre aspect de l'invention concerne un produit programme d'ordinateur permettant d'effectuer la série d'étapes du procédé selon l'invention.

Ce produit programme d'ordinateur comprend notamment un module d'affichage, une navigation, et des algorithmes pour la reconnaissance de forme, le calcul des grilles et la corrélation entre images.

La navigation permet par exemple de sélectionner les images élémentaires participant à la construction d'une image panoramique.

Le module d'affichage permet en particulier d'afficher plusieurs milliers d'images, les motifs déterminés par l'algorithme de reconnaissance de forme, les grilles calculées par l'algorithme de calcul des grilles et les résultats intermédiaires du procédé.

Selon une possibilité, le résultat des corrélations réalisées entre images adjacentes peut être facilement contrôlé et corrigé au besoin, en déplaçant les images adjacentes relativement les unes aux autres par un simple décalage correspondant aux pas de grille de l'image panoramique. Le système de grille permet ainsi de faire cette éventuelle correction par un opérateur de façon plus rapide qu'un décalage pixel par pixel.

L'alignement des images panoramiques les unes par rapport aux autres par l'opérateur est en outre facilité par l'utilisation du système de grille.

Le module d'affichage est de préférence configuré pour permettre une visualisation rapide depuis le plus faible grossissement correspondant à la mosaïque d'images élémentaires jusqu'au grossissement le plus élevé permettant d'identifier finement les différentes structures présentes au sein d'une image élémentaire.

Le produit programme d'ordinateur selon l'invention permet avantageusement de construire des visualisations bidimensionnelles et tridimensionnelles complètes, rapides et fiables d'un circuit intégré.

L'invention n'est pas limitée aux modes de réalisation précédemment décrits mais s'étend à tous modes de réalisation entrant dans la portée des revendications annexées.

## Revendications

1. Procédé de traitement d'une pluralité d'images élémentaires (10_{1R}, 10_{2R}, 10_{3R}) acquises sur au moins une zone d'au moins un niveau d'un circuit intégré à imager, dite zone à imager, lesdites images élémentaires de la pluralité d'images élémentaires étant des images de microscopie électronique à balayage SEM, ladite zone à imager comprenant des motifs alignés selon une grille de référence propre au circuit intégré, le procédé comprenant au moins la série d'étapes suivantes :
- Fournir ladite pluralité d'images élémentaires (10_{1R}, 10_{2R}, 10_{3R}) de la zone à imager, la taille de la zone à imager étant supérieure à la taille de chaque image élémentaire et chaque image élémentaire présentant un même grossissement et au moins un recouvrement partiel avec une image élémentaire adjacente de sorte que la pluralité d'images élémentaires forme une mosaïque (10) couvrant toute la zone à imager,
à l'aide d'au moins un dispositif informatique tel qu'un microprocesseur,
- Déterminer des motifs dans chacune des images élémentaires (10_{1R}, 10_{2R}, 10_{3R}), par exemple par seuillage d'intensité,
- Déterminer dans chacune des images élémentaires au moins une ligne selon une première direction d'alignement des motifs et au moins une ligne selon une deuxième direction d'alignement des motifs, lesdites première et deuxième directions d'alignement étant sensiblement orthogonales entre elles,
- Former au moins partiellement une grille élémentaire pour chaque image élémentaire, à partir de l'au moins une ligne selon la première direction d'alignement et l'au moins une ligne selon la deuxième direction d'alignement, ladite grille élémentaire comprenant des positions pour chacun des motifs de l'image élémentaire,
- Former une grille élémentaire moyenne à partir des grilles élémentaires au moins partiellement formées, en combinant toutes les lignes des grilles élémentaires partiellement formées par superposition desdites grilles élémentaires partiellement formées, et en déterminant une position moyenne de ligne pour chaque ensemble de lignes sensiblement superposées,
- Déterminer à partir de la grille élémentaire moyenne un premier pas de grille moyen dans la première direction d'alignement et un deuxième pas de grille moyen dans la deuxième direction d'alignement,
- Former une grille élémentaire de référence présentant lesdits premier et deuxième pas de grille moyens,
- Transformer la grille élémentaire au moins partiellement formée comprenant les positions de chacun des motifs pour chacune des images élémentaires, de sorte à ce que ladite grille élémentaire soit totalement formée et présente lesdits premier et deuxième pas de grille moyens,
- Appliquer ladite transformation à chacune des images élémentaires (10_{1R}, 10_{2R}, 10_{3R}), de sorte à obtenir des images élémentaires (30_{1C}, 30_{2C}) corrigées en distorsion.

2. Procédé selon la revendication précédente dans lequel la transformation de la grille élémentaire partiellement formée se fait en ajoutant des lignes issues de la grille élémentaire moyenne de façon à compléter et former totalement ladite grille élémentaire, la grille élémentaire présentant alors différents pas de grille selon la première direction d'alignement et différents pas de grille selon la deuxième direction d'alignement, puis en ajustant lesdits différents pas de grille de sorte à ce qu'ils soient égaux respectivement aux premier et deuxième pas de grille moyens.

3. Procédé selon l'une quelconque des revendications précédentes dans lequel la grille élémentaire moyenne est formée en combinant toutes les lignes des grilles élémentaires partiellement formées par superposition desdites grilles élémentaires partiellement formées, et en déterminant une position moyenne de ligne pour chaque ensemble de lignes sensiblement superposées, de sorte à former une grille élémentaire moyenne totalement formée.

4. Procédé selon la revendication précédente dans lequel la grille élémentaire moyenne est totalement formée en ajoutant des lignes par interpolation des lignes issues de la combinaison de toutes les lignes des grilles élémentaires partiellement formées.

5. Procédé selon l'une quelconque des revendications précédentes dans lequel la série d'étapes comprend en outre, après transformation de chacune des grilles élémentaires comprenant les positions de chacun des motifs pour chacune des images élémentaires :
- Construire une image panoramique de la zone à imager par corrélation, au niveau du recouvrement partiel entre deux images élémentaires adjacentes, des positions des motifs situés sur les grilles élémentaires totalement formées, lesdites grilles élémentaires totalement formées formant une grille de l'image panoramique.

6. Procédé selon la revendication précédente dans lequel la zone à imager comprend une première zone sur un premier niveau du circuit intégré et une deuxième zone sur un deuxième niveau du circuit intégré, lesdits premier et deuxième niveaux étant consécutifs de sorte que les première et deuxième zones présentent des motifs communs superposables, et dans lequel la série d'étapes est réalisée pour des images élémentaires acquises sur la première zone de sorte à construire une première image panoramique et pour des images élémentaires acquises sur la deuxième zone de sorte à construire une deuxième image panoramique, le procédé comprenant en outre :
- Egaliser les premiers pas de grille moyens des première et deuxième images panoramiques,
- Egaliser les deuxième pas de grille moyens des première et deuxième images panoramiques,
- Superposer les grilles des première et deuxième images panoramiques en corrélant des positions des motifs communs, afin d'obtenir une visualisation multi-niveaux du circuit intégré.

7. Procédé selon l'une quelconque des revendications précédentes dans lequel la pluralité d'images élémentaires comprend au moins 1000 images.

8. Procédé selon l'une quelconque des revendications précédentes dans lequel les motifs sont pris parmi des points et des segments correspondants respectivement à des vias et des portions de lignes d'interconnexions du circuit intégré.

9. Procédé selon la revendication précédente dans lequel la détermination des vias dans chacune des images élémentaires est réalisée par filtrage selon au moins un paramètre pris parmi un diamètre, une aire, une forme ovale.

10. Procédé selon l'une quelconque des revendications précédentes dans lequel la zone à imager est préalablement exposée par au moins une étape parmi une étape de déconstruction et une étape de déstratification.

11. Produit programme d'ordinateur comprenant des instructions, qui, lorsqu'elles sont interprétées et exécutées par au moins un processeur effectuent la série d'étapes du procédé selon l'une quelconque des revendications précédentes.

12. Produit programme d'ordinateur selon la revendication précédente comprenant un module de vérification et de correction par un opérateur de la détermination des motifs.

## Patentansprüche

1. Verfahren zur Verarbeitung einer Vielzahl von elementaren Bildern (10_{1R}, 10_{2R}, 10_{3R}), die auf mindestens einer abzubildenden Zone von mindestens einer Ebene einer integrierten Schaltung, die abzubildende Zone genannt, erfasst werden, wobei die elementaren Bilder von der Vielzahl von elementaren Bildern SEM-Rasterelektronenmikroskopiebilder sind, wobei die abzubildende Zone Muster umfasst, die gemäß einem der elektronischen Schaltung eigenen Referenzgitter ausgerichtet werden, wobei das Verfahren mindestens die Reihe der folgenden Schritte umfasst:
- Bereitstellen der Vielzahl von elementaren Bildern (10_{1R}, 10_{2R}, 10_{3R}) der abzubildenden Zone, wobei die Größe der abzubildenden Zone größer als die Größe jedes elementaren Bilds ist und jedes elementare Bild dieselbe Vergrößerung und mindestens eine partielle Abdeckung mit einem angrenzenden elementaren Bild aufweist, so dass die Vielzahl von elementaren Bildern ein Mosaik (10) bildet, das die gesamte abzubildende Zone bedeckt,
mithilfe mindestens einer Datenverarbeitungsvorrichtung, wie einem Mikroprozessor,
- Bestimmen von Mustern in jedem der elementaren Bilder (10_{1R}, 10_{2R}, 10_{3R}), beispielsweise durch Intensitätsschwellenwertbildung,
- Bestimmen von mindestens einer Zeile gemäß einer ersten Ausrichtungsrichtung der Muster und mindestens einer Zeile gemäß einer zweiten Ausrichtungsrichtung der Muster in jedem der elementaren Bilder, wobei die erste und die zweite Ausrichtungsrichtung im Wesentlichen zueinander orthogonal sind,
- zumindest partielles Bilden eines elementaren Gitters für jedes elementare Bild aus der mindestens einen Zeile gemäß der ersten Ausrichtungsrichtung und der mindestens einen Zeile gemäß der zweiten Ausrichtungsrichtung, wobei das elementare Gitter Positionen für jedes der Muster des elementaren Bilds umfasst,
- Bilden eines mittleren elementaren Gitters aus den zumindest partiell gebildeten elementaren Gittern, indem alle Zeilen der partiell gebildeten elementaren Gitter durch Überlagerung der partiell gebildeten elementaren Gitter kombiniert werden und eine mittlere Zeilenposition für jede Menge von im Wesentlichen überlagerten Zeilen bestimmt wird,
- Bestimmen eines ersten mittleren Gitterabstands in der ersten Ausrichtungsrichtung und eines zweiten mittleren Gitterabstands in der zweiten Ausrichtungsrichtung aus dem mittleren elementaren Gitter,
- Bilden eines elementaren Referenzgitters, das den ersten und den zweiten mittleren Gitterabstand aufweist,
- Umwandeln des zumindest partiell gebildeten elementaren Gitters, umfassend die Positionen von jedem der Muster für jedes der elementaren Bilder, so dass das elementare Gitter vollständig gebildet wird und den ersten und den zweiten mittleren Gitterabstand aufweist,
- Anwenden der Umwandlung auf jedes der elementaren Bilder (10_{1R}, 10_{2R}, 10_{3R}), so dass verzerrungskorrigierte elementare Bilder (30_{1C}, 30_{2C}) erhalten werden.

2. Verfahren nach dem vorhergehenden Anspruch, wobei die Umwandlung des zumindest partiell gebildeten elementaren Gitters durch Addieren der aus dem mittleren elementaren Gitter hervorgehenden Zeilen, um das elementare Gitter zu vervollständigen und vollständig zu bilden, wobei das elementare Gitter daraufhin unterschiedliche Gitterabstände gemäß der ersten Ausrichtungsrichtung und unterschiedliche Gitterabstände gemäß der zweiten Ausrichtungsrichtung aufweist, und dann durch Anpassen der unterschiedlichen Gitterabstände, so dass sie in Bezug auf die ersten und die zweiten Gitterabstände jeweils gleich sind, durchgeführt wird.

3. Verfahren nach einem der vorhergehenden Ansprüche, wobei das mittlere elementare Gitter durch Kombinieren von allen Zeilen der partiell gebildeten elementaren Gitter durch Überlagerung der partiell gebildeten elementaren Gitter und durch Bestimmen einer mittleren Zeilenposition für jede Menge von im Wesentlichen überlagerten Zeilen, so dass ein vollständig gebildetes mittleres elementares Gitter gebildet wird, gebildet wird.

4. Verfahren nach dem vorhergehenden Anspruch, wobei das mittlere elementare Gitter durch Addieren der Zeilen durch Interpolation der aus der Kombination aller Zeilen der partiell gebildeten elementaren Gitter hervorgehenden Zeilen vollständig gebildet wird.

5. Verfahren nach einem der vorhergehenden Ansprüche, wobei die Reihe von Schritten weiterhin nach der Umwandlung von jedem der elementaren Gitter, umfassend die Positionen von jedem der Muster für jedes der elementaren Bilder, umfasst:
- Konstruieren eines Panoramabilds der abzubildenden Zone durch Korrelation der Positionen der Muster, die sich auf den vollständig gebildeten elementaren Gittern befinden, auf der Ebene der partiellen Abdeckung zwischen zwei angrenzenden elementaren Bildern, wobei die vollständig gebildeten elementaren Gitter ein Gitter des Panoramabilds bilden.

6. Verfahren nach dem vorhergehenden Anspruch, wobei die abzubildende Zone eine erste Zone auf einer ersten Ebene der integrierten Schaltung und eine zweite Zone auf einer zweiten Ebene der integrierten Schaltung umfasst, wobei die erste und die zweite Ebene aufeinanderfolgend sind, so dass die erste und die zweite Zone überlagerbare gemeinsame Muster aufweisen, und wobei die Reihe von Schritten für elementare Bilder, die auf der ersten Zone erfasst werden, um ein erstes Panoramabild zu konstruieren, und für elementare Bilder, die auf der zweiten Zone erfasst werden, um ein zweites Panoramabild zu konstruieren, umgesetzt wird, wobei das Verfahren weiterhin umfasst:
- Ausgleichen der ersten mittleren Gitterabstände des ersten und des zweiten Panoramabilds,
- Ausgleichen der zweiten mittleren Gitterabstände des ersten und des zweiten Panoramabilds,
- Überlagern der Gitter des ersten und des zweiten Panoramabilds durch Korrelieren der Positionen der gemeinsamen Muster, um eine Visualisierung der integrierten Schaltung auf mehreren Ebenen zu erhalten.

7. Verfahren nach einem der vorhergehenden Ansprüche, wobei die Vielzahl von elementaren Bildern mindestens 1000 Bilder umfasst.

8. Verfahren nach einem der vorhergehenden Ansprüche, wobei die Muster aus Punkten und Segmenten ausgewählt sind, die jeweils Durchkontaktierungen und Teilen von Verbindungsleitungen der integrierten Schaltung entsprechen.

9. Verfahren nach dem vorhergehenden Anspruch, wobei die Bestimmung von Durchkontaktierungen in jedem der elementaren Bilder durch Filtern gemäß einem Parameter, der aus einem Durchmesser, einem Flächeninhalt, einer ovalen Form ausgewählt ist, umgesetzt wird.

10. Verfahren nach einem der vorhergehenden Ansprüche, wobei die abzubildende Zone durch mindestens einen Schritt aus einem Dekonstruktionsschritt und einem Delaminationsschritt zuvor freigelegt wird.

11. Computerprogrammprodukt, umfassend Anweisungen, die, wenn sie von mindestens einem Prozessor interpretiert und ausgeführt werden, die Reihe von Schritten des Verfahrens nach einem der vorhergehenden Ansprüche durchführen.

12. Computerprogrammprodukt nach dem vorhergehenden Anspruch, umfassend ein Modul zur Verifizierung und Korrektur durch einen Betreiber der Bestimmung der Muster.

## Claims

1. Method for processing a plurality of elementary images (10_{1R}, 10_{2R}, 10_{3R}) acquired on at least one zone of at least one level of an integrated circuit to be imaged, referred to as the zone to be imaged, said elementary images of the plurality of elementary images being scanning electron microscopy (SEM) images, said zone to be imaged comprising patterns aligned according to a reference grid specific to the integrated circuit, the method comprising at least the following series of steps:
- Providing said plurality of elementary images (10_{1R}, 10_{2R}, 10_{3R}) of the zone to be imaged, the size of the zone to be imaged being greater than the size of each elementary image and each elementary image having the same magnification and at least a partial overlap with an adjacent elementary image such that the plurality of elementary images forms a mosaic (10) covering the entire zone to be imaged,
using at least one computing device such as a microprocessor,
- Determining patterns in each of the elementary images (10_{1R}, 10_{2R}, 10_{3R}), for example by intensity thresholding,
- Determining, in each of the elementary images, at least one line in a first pattern alignment direction, and at least one line in a second pattern alignment direction, said first and second alignment directions being substantially orthogonal to one another,
- Forming, at least partially, an elementary grid for each elementary image, from the at least one line in the first alignment direction and the at least one line in the second alignment direction, said elementary grid comprising positions for each of the patterns of the elementary image,
- Forming an average elementary grid from the at least partially formed elementary grids, by combining all the lines of the partially formed elementary grids by superimposing said partially formed elementary grids, and determining an average line position for each set of substantially superimposed lines,
- Determining, from the average elementary grid, a first average grid pitch in the first alignment direction and a second average grid pitch in the second alignment direction,
- Forming a reference elementary grid having said first and second average grid pitches,
- Transforming the at least partially formed elementary grid comprising the positions of each of the patterns for each of the elementary images, such that said elementary grid is fully formed and has said first and second average grid pitches,
- Applying said transformation to each of the elementary images (10_{1R}, 10_{2R}, 10_{3R}), so as to obtain distortion-corrected elementary images (30_{1C}, 30_{2C}).

2. Method according to the preceding claim, wherein the transformation of the partially formed elementary grid is carried out by adding lines from the average elementary grid so as to complete and fully form said elementary grid, the elementary grid thus having different grid pitches in the first alignment direction and different grid pitches in the second alignment direction, then adjusting said different grid pitches such that they are equal to the first and second average grid pitches respectively.

3. Method according to any one of the preceding claims, wherein the average elementary grid is formed by combining all of the lines of the partially formed elementary grids by superimposing said partially formed elementary grids, and determining an average line position for each set of substantially superimposed lines, so as to form a fully formed average elementary grid.

4. Method according to the preceding claim, wherein the average elementary grid is fully formed by adding lines by interpolating the lines from the combination of all of the lines of the partially formed elementary grids.

5. Method according to any one of the preceding claims, wherein the series of steps further comprises, after transformation of each of the elementary grids comprising the positions of each of the patterns for each of the elementary images:
- Constructing a panoramic image of the zone to be imaged by correlating, at the partial overlap between two adjacent elementary images, the positions of the patterns located on the fully formed elementary grids, said fully formed elementary grids forming a grid of the panoramic image.

6. Method according to the preceding claim, wherein the zone to be imaged comprises a first zone on a first level of the integrated circuit and a second zone on a second level of the integrated circuit, said first and second levels being consecutive such that the first and second zones have common, superimposable patterns, and wherein the series of steps is carried out for elementary images acquired on the first zone so as to construct a first panoramic image and for elementary images acquired on the second zone so as to construct a second panoramic image, the method further comprising:
- Equalising the first average grid pitches of the first and second panoramic images,
- Equalising the second average grid pitches of the first and second panoramic images,
- Superimposing the grids of the first and second panoramic images by correlating positions of the common patterns, in order to obtain a multi-level view of the integrated circuit.

7. Method according to any one of the preceding claims, wherein the plurality of elementary images comprises at least 1,000 images.

8. Method according to any one of the preceding claims, wherein the patterns are taken from among points and segments corresponding respectively to vias and portions of interconnect lines of the integrated circuit.

9. Method according to the preceding claim, wherein the determination of the vias in each of the elementary images is carried out by filtering according to at least one parameter taken from among a diameter, an area and an oval shape.

10. Method according to any one of the preceding claims, wherein the zone to be imaged is previously exposed by at least one step from among a deprocessing step and a delayering step.

11. Computer program product comprising instructions which, when interpreted and executed by at least one processor, carry out the series of steps of the method according to any one of the preceding claims.

12. Computer program product according to the preceding claim, comprising a module for the verification and correction, by an operator, of the determination of the patterns.
